# EUROPÄISCHE PATENTSCHRIFT

(11) **EP 3 807 525 B1**
(45) Veröffentlichungstag und Bekanntmachung des Hinweises auf die Patenterteilung: **12.04.2023**
(21) Anmeldenummer: 19728045.6
(22) Anmeldetag: 31.05.2019
(51) Int. Cl.: F03D 3/06

(54) **WINDKRAFTANLAGE MIT VERTIKALER DREHACHSE DES ROTORS UND SCHWIMMENDER WINDPARK MIT MEHREREN SOLCHER WINDKRAFTANLAGEN**
WIND TURBINE WITH VERTICAL AXIS OF ROTATION OF THE ROTOR AND FLOATING WIND FARM COMPRISING A PLURALITY OF SUCH WIND TURBINES
INSTALLATION ÉOLIENNE COMPRENANT UN AXE DE ROTATION VERTICAL DU ROTOR ET PARC ÉOLIEN FLOTTANT COMPRENANT PLUSIEURS INSTALLATIONS ÉOLIENNES DE CE TYPE

(30) Priorität: 12.06.2018 DE 102018114004
(43) Veröffentlichungstag der Anmeldung: 21.04.2021
(73) Patentinhaber: Tasakos, Charalampos, 70597 Stuttgart (DE); Demopoulos, Andreas, Buzzard, Bedfortshire LU7 4WL (GB)
(72) Erfinder: DEMOPOULOS, Andreas, Bedfortshire LU7 4WL (GB)
(74) Vertreter: Wörz, Volker Alfred
(86) Internationale Anmeldenummer: PCT/EP2019/064226
(87) Internationale Veröffentlichungsnummer: WO 2019/238437

(56) Entgegenhaltungen:
- WO-A1-97/20142
- WO-A1-2011/050452
- US-A- 5 531 567
- US-A1- 2008 267 777
- US-A1- 2011 176 919

## Beschreibung

Die vorliegende Erfindung betrifft eine Windkraftanlage mit einem um eine vertikale Drehachse drehbaren Rotor mit einer rotierenden Nabe und mehreren entlang eines Außenumfangs des Rotors angeordneten Rotorblättern, die jeweils einen unteren Abschnitt und einen an einem oberen distalen Ende des unteren Abschnitts befestigten oberen Abschnitt aufweisen. Untere proximale Enden der unteren Abschnitte der Rotorblätter sind jeweils an der rotierenden Nabe befestigt. Ferner betrifft die Erfindung einen schwimmenden Windpark umfassend eine schwimmende Plattform mit mehreren darauf befestigten Windkraftanlagen.

Ein wesentlicher Bestandteil jeder aus dem Stand der Technik bekannten Windkraftanlage mit vertikaler Drehachse des Rotors (sogenannte vertikale Windkraftanlage) ist ein zentrales langgestrecktes Stütz- oder Tragelement, an dem die Rotorblätter seitlich angeordnet und befestigt oder gelagert sind.

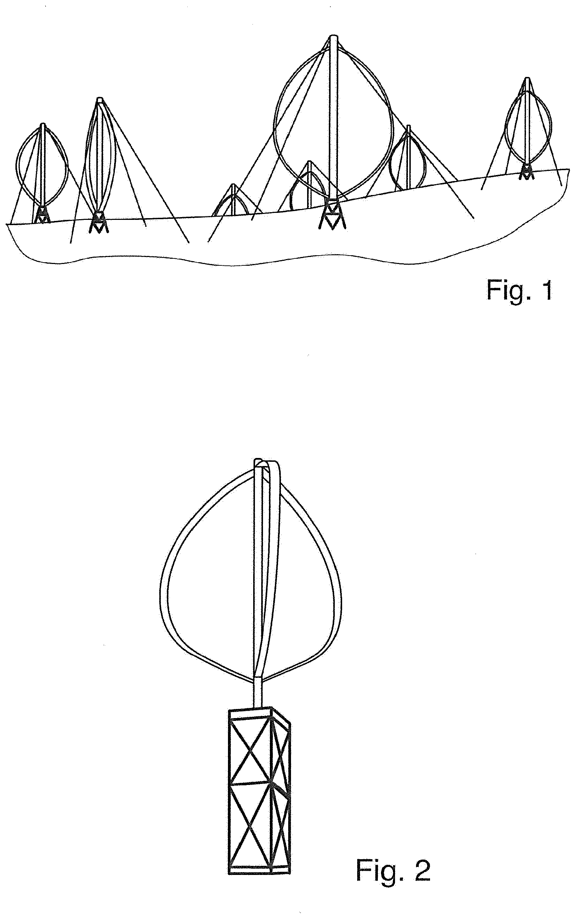

In den Figuren 1 und 2 sind verschiedene Formen von aus dem Stand der Technik bekannten vertikalen Windkraftanlagen gezeigt. Die Trägheit und die aerodynamischen Kräfte, die auf die Rotorblätter wirken, führen zu einer Beauftragung des zentralen Stütz- oder Tragelements mit einem beträchtlichen Biegemoment. Bei der Anlage aus Figur 1 ist das zentrale Stütz- oder Tragelement am oberen Ende durch mehrere Spanndrähte gesichert. Um eine Behinderung der rotierenden Rotorblätter zu vermeiden, sind diese Drähte in einer relativ großen Entfernung zu der Windkraftanlage im Boden befestigt. Diese Art der Sicherung des Stütz- oder Tragelements macht die Windkraftanlagen ungeeignet für Windkraftanlagen, die auf einer Plattform im Wasser schwimmen, da sie aufgrund der relativ flach abgespannt Spanndrähte eine große Grundfläche beansprucht, was eine relativ große und damit auch teure schwimmende Plattform voraussetzen würde. In den Dokumenten US2008267777 und US5531567 sind andere Beispiele des Standes der Technik gezeigt.

In einer alternativen Anlage, wie sie in Figur 2 gezeigt ist, ist das zentrale Stütz- oder Tragelement nicht durch Spanndrähte gesichert, sondern das Stütz- oder Tragelement ist sehr stabil ausgebildet, um den auftretenden großen Biegemomenten standzuhalten, die über die Rotorblätter und die darauf einwirkenden aerodynamischen Kräfte wirken. Dies ist eine sehr teure Lösung, welche die Gesamtkosten der Windkraftanlage erheblich erhöhen. Außerdem ist eine solche Anlage relativ schwer, sodass sie für den Einsatz für schwimmende Windkraftanlagen weniger gut geeignet ist.

Ausgehend von dem beschriebenen Stand der Technik liegt der vorliegenden Erfindung die Aufgabe zugrunde, eine bekannte vertikale Windkraftanlage dahingehend auszugestalten und weiterzubilden, dass sie besonders gut geeignet für den Einsatz als schwimmende Windkraftanlage ist.

Zur Lösung dieser Aufgabe wird eine vertikale Windkraftanlage mit den Merkmalen des Anspruchs 1 vorgeschlagen. Insbesondere wird ausgehend von der Windkraftanlage der eingangs genannten Art vorgeschlagen, dass die unteren Abschnitte der Rotorblätter zusammen mit der Nabe, mit Spanndrähten und mit Versteifungsdrähten eine inverse Pyramide bilden, wobei die Spanndrähte erste Befestigungspunkte im Bereich der distalen Enden der unteren Abschnitte miteinander verbinden und die Versteifungsdrähte die ersten Befestigungspunkte mit der Nabe verbinden.

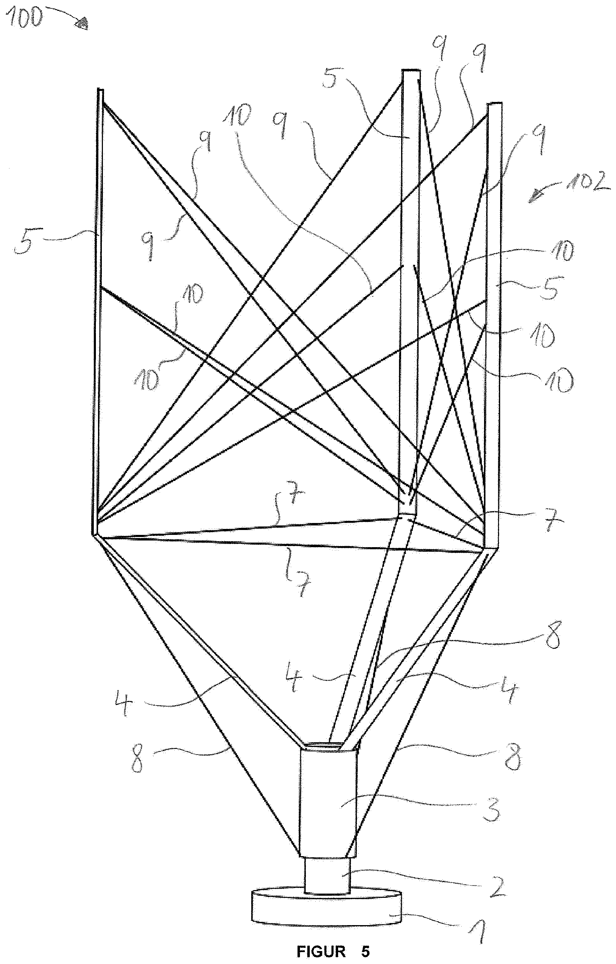

Die vorliegende Erfindung überwindet die Nachteile des Standes der Technik durch zweierlei Verbesserungen. Zum einen ist das zentrale Stütz- oder Tragelement eliminiert. Dies ist beispielsweise in den Figuren 5, 11 und 15 gezeigt. In diesem Fall sind die Rotorblätter wie folgt gehalten: ein unterer Abschnitt der Rotorblätter in Verbindung mit Spanndrähten und einer rotierenden Nabe an einem Sockel der Windkraftanlage werden dazu verwendet, eine stabile Plattform zu erzeugen, die als inverse Pyramide bezeichnet wird. Die Pyramide hat eine Grundfläche mit mindestens drei Ecken. Vorzugsweise hat die inverse Pyramide ein Dreieck (besonders bevorzugt ein gleichschenkliges, gleichwinkliges Dreieck) als Grundfläche. Die Form der Grundfläche kann jedoch auch ein Rechteck (im Spezialfall ein Quadrat) oder jedes andere beliebige gleichseitige Polygon sein. Die inverse Pyramide wird genutzt, um den oberen Abschnitt der Rotorblätter über interne Versteifungsdrähte zu halten, die an den Ecken der Grundfläche der inversen Pyramide befestigt sind.

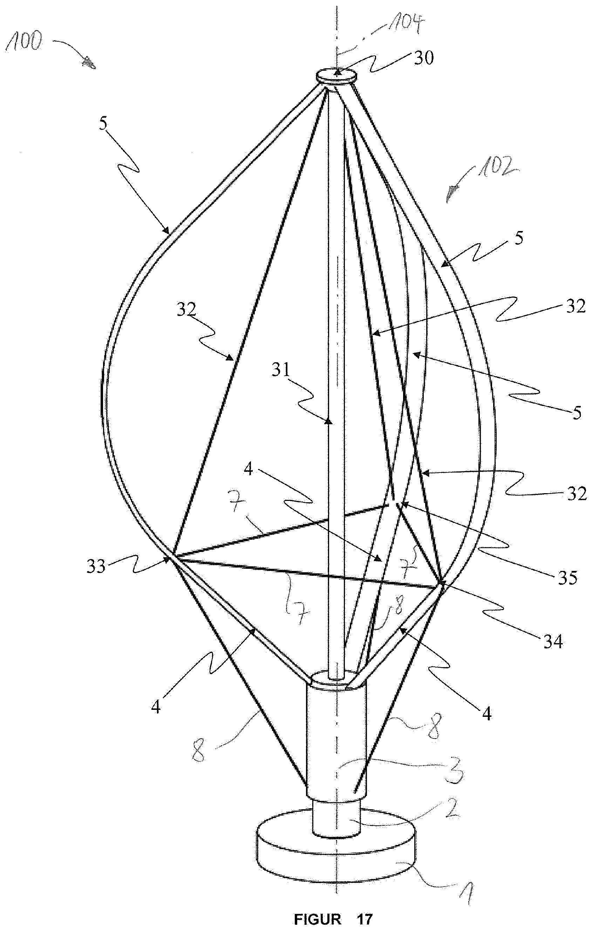

Zum anderen ist es denkbar, zwar das zentrale Stütz- oder Tragelement beizubehalten, aber gleichzeitig durch interne Spanndrähte gegen die Ecken der Grundfläche der inversen Pyramide zu versteifen. Dies ist beispielsweise in Figur 17 gezeigt. Die Spannbreite nehmen das Biegemoment von dem zentralen Stütz- oder Tragelement auf, während das Stütz- oder Tragelement selbst im Wesentlichen nur Druckkräften ausgesetzt ist. Dies ermöglicht es, das zentrale Stütz- oder Tragelement als eine kleinere und kostengünstigere Struktur auszugestalten, da es nicht mehr als ein freitragender Balken, wie dies in Figur 2 gezeigt ist, arbeitet. Des Weiteren behindert das intern versteifte Stütz- oder Tragelement die rotierenden Rotorblätter nicht, und deshalb erfordert eine Aufnahme oder Lagerung des zentralen Stütz- oder Tragelements keine Grundfläche, die größer als die Windkraftanlage selbst ist.

Bevorzugte Weiterbildungen der vorliegenden Erfindung sind Gegenstand der Unteransprüche. Ihre wesentlichen Merkmale und Vorteile werden nachfolgend unter Bezugnahme auf die Figuren näher erläutert. Dabei zeigen die Figuren zwar verschiedene Ausführungsbeispiele der vorliegenden Erfindung. Es versteht sich jedoch, dass die einzelnen Merkmale der verschiedenen Ausführungsbeispiele beliebig miteinander kombiniert werden können, ohne dass dies ausdrücklich in den Figuren gezeigt oder nachfolgend beschrieben sein muss. Die Figuren zeigen:
- Figur 1: ein erstes Beispiel einer aus dem Stand der Technik bekannten vertikalen Windkraftanlage;
- Figur 2: ein zweites Beispiel einer aus dem Stand der Technik bekannten vertikalen Windkraftanlage;
- Figur 3: ein erstes Ausführungsbeispiel einer erfindungsgemäßen Windkraftanlage mit Versteifungsdrähten, jedoch ohne Spanndrähte;
- Figur 4: die erfindungsgemäße Windkraftanlage mit Versteifungsdrähten und Spanndrähten für eines der Rotorblätter;
- Figur 5: die erfindungsgemäße Windkraftanlage aus Figur 3 mit Versteifungsdrähten und Spanndrähten für alle Rotorblätter;
- Figur 6: ein typisches Segment einer Tragfläche der Rotorblätter der Windkraftanlage mit konstantem Querschnitt;
- Figur 7: eine aerodynamische Verkleidung für die Versteifungsdrähte;
- Figur 8: einen Querschnitt durch die rotierende Nabe, die feststehende Aufnahme und den Sockel der Windkraftanlage;
- Figuren 9-11: ein anderes Ausführungsbeispiel einer erfindungsgemäßen Windkraftanlage mit Versteifungsdrähten und teilweise mit Spanndrähten;
- Figuren 12-15: noch ein anderes Ausführungsbeispiel einer erfindungsgemäßen Windkraftanlage mit Versteifungsdrähten und teilweise mit Spanndrähten;
- Figuren 16 und 17: noch ein anderes Ausführungsbeispiel einer erfindungsgemäßen Windkraftanlage mit Versteifungsdrähten und Spanndrähten;
- Figur 18: zwei auf einer schwimmenden Plattform befestigte erfindungsgemäße Windkraftanlagen gemäß Figur 5;

- Figur 19: zwei auf einer schwimmenden Plattform befestigte erfindungsgemäße Windkraftanlagen gemäß Figur 13; und
- Figur 20: eine alternative Ausgestaltung der inversen Pyramide im Bereich des Sockels einer erfindungsgemäßen Windkraftanlage.

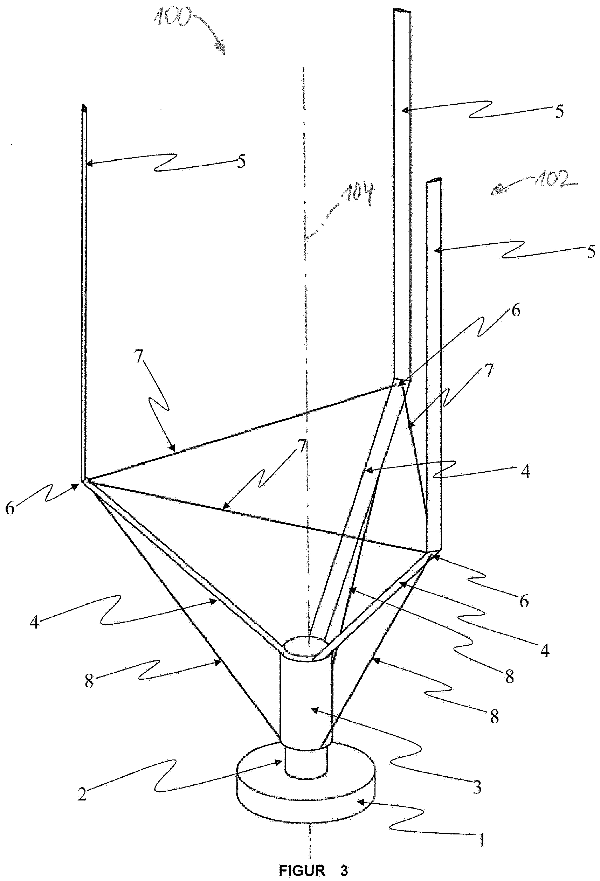

Die Figuren 3-5 zeigen eine Windkraftanlage, die in ihrer Gesamtheit mit dem Bezugszeichen 100 bezeichnet ist. Die Windkraftanlage 100 hat einen Rotor 102 mit einer vertikalen Drehachse 104. Deshalb wird die Windkraftanlage 100 auch als eine vertikale Windkraftanlage bezeichnet. Der Rotor 102 der Windkraftanlage 100 gemäß dem Ausführungsbeispiel der Figuren 3-5 hat drei Rotorblätter 4, 5, die um die vertikale Drehachse 104 herum mit dem gleichen Winkelabstand (120°) relativ zueinander angeordnet sind.

Figur 3 zeigt, dass die Rotorblätter 4, 5 aus zwei Teilen aufgebaut sind. Ein unterer Abschnitt 4 mit einer im Wesentlichen geraden Längserstreckung ist mit seinem unteren proximalen Ende an der Oberseite einer rotierenden Nabe 3 befestigt und erstreckt sich ausgehend von der Nabe 3 schräg nach außen und nach oben in einem Winkel von etwa 30-60° relativ zu einer Vertikalen. Ein oberer Abschnitt 5 der Rotorblätter hat eine im Wesentlichen gerade Längserstreckung und ist an einem oberen distalen Ende des unteren Abschnitts 4 befestigt und steht in einem Winkel von etwa 30-60° relativ zu der Längserstreckung des unteren Abschnitts 4. Die Längserstreckung des oberen Abschnitts 5 der Rotorblätter verläuft im Wesentlichen parallel zu der Drehachse 104.

Unter Bezugnahme auf die Figur 3 wird der Aufbau des Rotors 102 der erfindungsgemäßen Windkraftanlage 100 näher erläutert. Der untere Abschnitt 4 der Rotorblätter in Verbindung mit Spanndrähten 7 und der rotierenden Nabe 3 an einem Sockel 1 der Windkraftanlage 100 werden dazu verwendet, eine stabile Plattform zu erzeugen, die als inverse Pyramide bezeichnet wird. Der Sockel 1 der Windkraftanlage 100 ist am Boden oder anderweitig, beispielsweise auf einer schwimmenden Plattform, befestigt. Eine runde Aufnahme (Lagerelement) 2 ist an dem Sockel 1 befestigt. Die Nabe 3 mit einer im Querschnitt kreisförmigen Aufnahme ist an der feststehenden Aufnahme 2 drehbar befestigt, sodass die Nabe 3 um die vertikale Drehachse 104 relativ zu der Aufnahme 2 rotieren kann.

Mit dem Bezugszeichen 6 sind definierte Befestigungspunkte an dem oberen distalen Ende der unteren Abschnitte 4 bezeichnet, die in der Nähe der Verbindung mit den oberen Abschnitten 5 der Rotorblätter sind. Die eigentlichen Befestigungselemente, die an den Befestigungspunkten 6 befestigt sind, sind nicht gezeigt, da solche Befestigungselemente hinlänglich aus dem Stand der Technik bekannt sind. Die Spanndrähte 7 verbinden die Befestigungspunkte 6 miteinander, während Versteifungsdrähte 8 die Befestigungspunkte 6 mit einem unteren Bereich der rotierenden Nabe 3 in der Nähe des Sockels 1 verbinden. Gedachte Verlängerungen der Versteifungsdrähte 8 nach unten schneiden sich an der vertikalen Drehachse 104 und bilden die Spitze der inversen Pyramide.

Durch Vorspannen der Spanndrähte 7 und der Versteifungsdrähte 8 üben sie Druckkräfte auf die unteren Abschnitte 4 der Rotorblätter ausgehend von den Befestigungspunkten 6 bis hinunter zu der Nabe 3 aus. Diese Anordnung bildet eine stabile Plattform an dem Sockel 1 der Windkraftanlage 100 in der Form der inversen Pyramide, wobei die Befestigungspunkte 6 die drei Ecken der Grundfläche der inversen Pyramide bilden. Diese stabile Plattform wird nachfolgend als inverse Pyramide bezeichnet und umfasst im Wesentlichen die folgenden vier Elemente:
- die rotierende Nabe 3,
- den unteren Abschnitt 4 der Rotorblätter zusammen mit den entsprechenden Befestigungspunkten 6,
- Spanndrähte 7, welche die Befestigungspunkte 6 miteinander verbinden, und
- Versteifungsdrähte 8, welche die Befestigungspunkte 6 mit der Nabe 3 verbinden.

Figur 3 zeigt eine Ausführungsform einer Windkraftanlage 100 mit drei Rotorblättern. Drei Rotorblätter sind die minimale Anzahl an Rotorblättern, die erforderlich ist, um die stabile Plattform in Form der inversen Pyramide konstruieren zu können. Falls eine Windkraftanlage 100 mehr als drei Rotorblätter aufweist, sind die Rotorblätter vorzugsweise unterteilt in Gruppen von jeweils drei Rotorblättern in jeder Gruppe. Die oberen Abschnitte 5 der Rotorblätter von jeder Gruppe sind dann an den jeweils gegenüberliegenden Ecken der Grundfläche der inversen Pyramide gehalten, die der jeweiligen Gruppe entspricht.

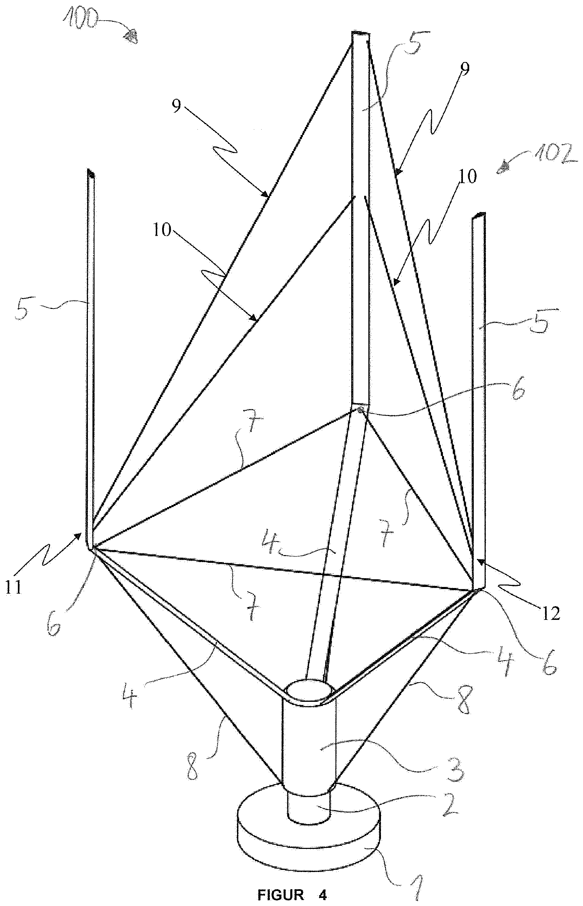

Unter Bezugnahme auf Figur 4 werden das Verfahren und die Struktur zum Halten bzw. Abstützen der oberen Abschnitte 5 der Rotorblätter gegenüber der inversen Pyramide an dem Sockel 1 der Windkraftanlage 100 näher beschrieben. Jeder oberen Abschnitt 5 liegt gegenüber von zwei Eckpunkten der Grundfläche der inversen Pyramide. In der Nähe dieser Eckpunkte sind Befestigungspunkte 11, 12 in dem oberen Abschnitt 5 oder dem unteren Abschnitt 4 der Rotorblätter ausgebildet. Versteifungsdrähte 9 verbinden die Spitzen (die distalen Enden) der oberen Abschnitte 5 mit den Befestigungspunkten 11, 12, während Versteifungsdrähte 10 etwa die Mitte der oberen Abschnitte 5 der Rotorblätter mit den gleichen Befestigungspunkten 11, 12 verbinden. Zusätzliche Versteifungsdrähte, die in Figur 4 nicht gezeigt sind, können verwendet werden, um verschiedene Bereiche der oberen Abschnitte 5 der Rotorblätter mit den gleichen Befestigungspunkten 11, 12 der gegenüberliegenden Rotorblätter zu verbinden.

Die Versteifungsdrähte 9, 10 (und eventuell vorhandene zusätzliche Haltedrähte) könnten statt an die Befestigungspunkte 11, 12 auch an den Befestigungspunkten 6 befestigt sein, welche die Eckpunkte der Grundfläche der inversen Pyramide definieren. Üblicherweise sind die Befestigungspunkte 11, 12 andere als die Befestigungspunkte 6, aber die Befestigungspunkte 6 könnten statt der Befestigungspunkte 11, 12 genutzt werden, um die Versteifungsdrähte 8 der inversen Pyramide und die Versteifungsdrähte 9, 10 der oberen Abschnitte 5 der Rotorblätter zu befestigen.

In diesem Ausführungsbeispiel der Erfindung sind die Versteifungsdrähte 9, 10 (und eventuell vorhandene zusätzliche xxx Haltedrähte) straff angezogen, d.h. ohne durchzuhängen, aber sie stehen unter keiner oder nur einer vernachlässigbar geringen Vorspannung. Wenn der Rotor 102 rotiert, werden die Rotorblätter durch die Wirkung der Trägheit und der aerodynamischen Kräfte nach außen gedrückt und setzen alle Haltedrähte unter Spannung.

Figur 5 zeigt alle Versteifungsdrähte 9, 10, welche in diesem Ausführungsbeispiel die drei Rotorblätter des Rotors 102 der Windkraftanlage 100 halten. Falls eine Windkraftanlage 100 mehr als drei Rotorblätter aufweist, sind die Rotorblätter vorzugsweise in Gruppen unterteilt, die jeweils drei Rotorblätter in jeder Gruppe umfassen. Die oberen Abschnitte 5 von jeder Gruppe werden dann in der Nähe der jeweils gegenüberliegenden Ecken der Grundfläche der inversen Pyramide, die der entsprechenden Gruppe entspricht, an den Befestigungspunkten 11, 12 gehalten.

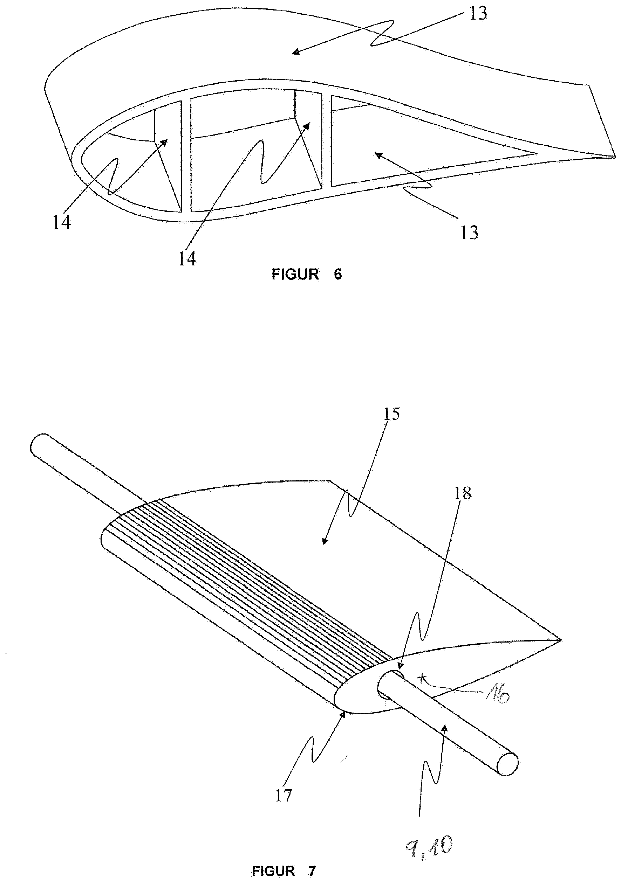

Figur 6 zeigt ein typisches Segment einer Tragfläche der Rotorblätter der Windkraftanlage 100 mit konstantem Querschnitt, wobei der Abstand von dem vorderen abgerundeten Ende bis zu dem gegenüber liegenden spitz auslaufenden Ende der Tragfläche über die gesamte Längserstreckung der Tragfläche konstant ist. Eine äußere Hülle 13 der Rotorblätter wird von einer internen Rippenstruktur 14 gestützt bzw. gehalten. Zusätzliche interne Rippenelement könnten vorgesehen werden, falls dies erforderlich ist. Die Rotorblätter mit konstantem Querschnitt der Tragfläche sind günstiger in der Herstellung, da sie in einem Strangziehverfahren hergestellt werden können. Selbstverständlich wäre es jedoch auch möglich, Rotorblätter mit einem nicht-konstanten Querschnitt, die sich beispielsweise zu ihrem distalen Ende hin verjüngen, bei der erfindungsgemäßen Windkraftanlage 100 zu verwenden. Somit stellt die konkrete Form und Ausgestaltung der Rotorblätter keine Beschränkung der vorliegenden Erfindung dar.

Figur 7 zeigt ein aerodynamisches Verkleidungselement 15, das dazu genutzt werden kann, das Zerren an den Versteifungsdrähten 9, 10 infolge des Luftwiderstands zu reduzieren. Ein Querschnitt 17 des Verkleidungselements 15 ist eine Tragfläche mit geringem Luftwiderstand, deren Querschnitt über die gesamte Längserstreckung im Wesentlichen konstant ist, wobei der Abstand von dem vorderen abgerundeten Ende bis zu dem gegenüber liegenden spitz auslaufenden Ende der Tragfläche über die gesamte Längserstreckung der Tragfläche konstant ist. Das Verkleidungselement 15 weist entlang seiner Längserstreckung eine Bohrung 18 auf. Die Versteifungsdrähte 9, 10 haben üblicherweise einen runden Querschnitt, sodass sie durch die Bohrung 18 hindurchdurchgeführt werden können. Nach der Montage des Verkleidungselements 15 an den Versteifungsdrähten 9, 10 ist das Verkleidungselement 15 somit um eine Längsachse der Versteifungsdrähte 9, 10, die im Wesentlichen der Längsachse der Bohrung 18 entspricht, frei rotierbar an den Versteifungsdrähten 9, 10 gehalten. Der Innendurchmesser der Bohrung 18 ist etwas größer als der Außendurchmesser der Versteifungsdrähte 9, 10, sodass eine freie Rotation des Verkleidungselements 15 um die Versteifungsdrähte 9, 10 gewährleistet ist. Ein aerodynamischer Schwerpunkt des Verkleidungselements 15 erstreckt sich entlang der Längserstreckung der Tragfläche und ist mit dem Bezugszeichen 16 bezeichnet. Die Längsachse der Borhung 18 verläuft vorzugsweise parallel zu dem aerodynamischen Schwerpunkt 16 des Verkleidungselements 15. Die Bohrung 18 ist zwischen dem aerodynamischen Schwerpunkt 16 und dem vorderen abgerundeten Ende der Tragfläche angeordnet, sodass die aerodynamischen Kräfte, die auf das Verkleidungselement 15 wirken, das Verkleidungselement 15 entlang der lokal wirkenden Windrichtung ausrichten, wobei unabhängig von der Windrichtung stets das vordere abgerundete Ende der Tragfläche dem Wind zugewandt und das spitz auslaufende Ende vom Wind abgewandt ist.

Um die Befestigung des Verkleidungselement 15 an den Versteifungsdrähten 9, 10 zu erleichtern, könnte das Verkleidungselement 15 zweiteilig ausgebildet sein mit einer Schnittebene zwischen den beiden Teilen, die durch die Bohrung 18 verläuft, vorzugsweise die Bohrung 18 entlang ihrer Längserstreckung in zwei gleich große Hohlzylindersegmente unterteilt, die zusammengesetzt die Bohrung 18 bilden. Vorzugsweise verläuft die Trennebene durch die Längsachse der Borhung 18 und den aerodynamischen Schwerpunkt 16. Die beiden Teile des Verkleidungselements 15 könnten um die Versteifungsdrähte 9, 10 herum gelegt und miteinander verklipst oder auf andere Weise aneinander befestigt werden. Das Verkleidungselement 15 kann unter Verwendung von kostengünstigen Materialien hergestellt werden, wie beispielsweise extrudiertem Schaum (aufgeschäumtem Kunststoff) oder einem sonstigen möglichst leichten Kunststoff.

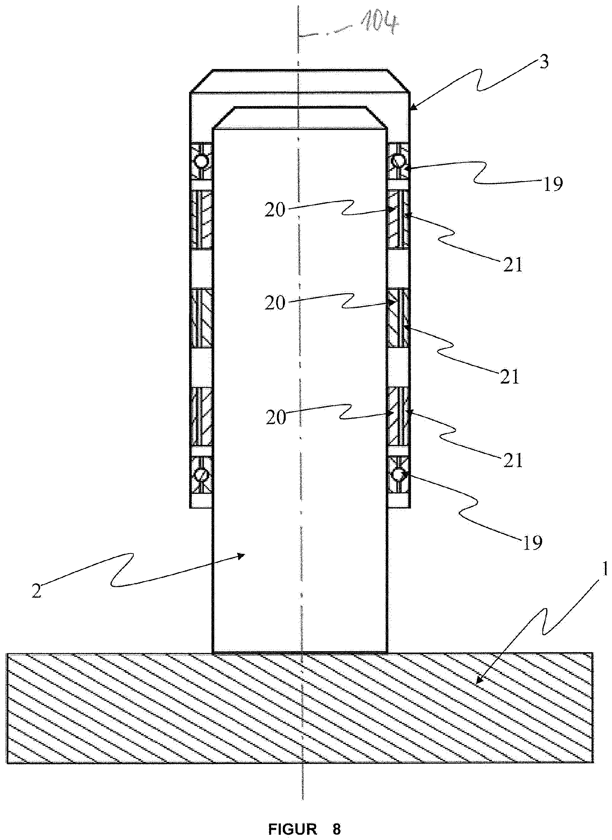

Figur 8 zeigt einen Querschnitt durch die rotierende Nabe 3, die feststehende Aufnahme 2 und den Sockel 1 der Windkraftanlage 100. der Sockel 1 ist am Boden oder an einem anderen Element, wie beispielsweise einer schwimmenden Plattform, befestigt. Die Aufnahme 2 ist fest an dem Sockel 1 befestigt. Die rotierende Nabe 3 ist mittels Lagerelementen 19, die zum Beispiel als Kugellager, Wälzlager oder magnetische Lager ausgebildet sind, drehbar an der Aufnahme 2 gelagert, sodass die Nabe 3 um die Drehachse 104 frei drehbar ist. In dem gezeigten Ausführungsbeispiel sind permanent Magnete 21 an der rotierenden Nabe 3 befestigt, während Statorwicklungen 20 an der Aufnahme 2 befestigt sind. Die Permanentmagnete 21 und die Statorwicklungen 20 sind derart angeordnet, dass sie direkt durch Rotation der Nabe 3 Elektrizität erzeugen können. Die Nabe 3 wird durch die aerodynamischen Kräfte in eine Rotationsbewegung versetzt, die auf die Rotorblätter 4, 5 wirken, die an der Nabe 3 befestigt sind, wie in den Figuren 3-5 gezeigt.

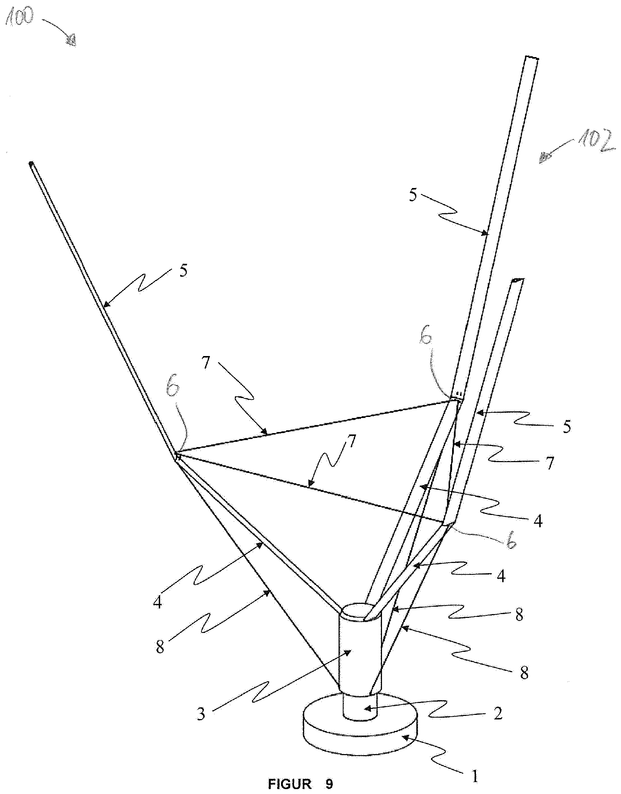

Figuren 9-11 zeigen ein alternatives Ausführungsbeispiel der vorliegenden Erfindung, d.h. eine vertikale Windkraftanlage 100 ohne ein zentrales langgestrecktes Stütz- oder Tragelement, bei dem die oberen Abschnitte 5 der Rotorblätter nach innen gebogen sind, um gebogene Rotorblätter zu bilden. Dies wird dadurch erreicht, dass die Versteifungsdrähte 9, 10, welche die oberen Abschnitte 5 halten und stützen, unter Vorspannung gebracht werden.

Die zweiteiligen Rotorblätter 4, 5, bei denen die unteren und oberen Abschnitte 4, 5 fest miteinander verbunden sind, entsprechen im Wesentlichen denen aus Figur 3. Der einzige Unterschied besteht in dem größeren Winkel zwischen der Längserstreckung des unteren Abschnitts 4 und des oberen Abschnitts 5, der derart gewählt ist, dass die oberen Abschnitte 5 in Figur 9 nach außen ragen anstatt sich - wie in Figur 3 - in der Vertikalen zu erstrecken. Die inverse Pyramide ist allerdings die gleiche, wie sie zuvor anhand des ersten Ausführungsbeispiels der Figuren 3-5 beschrieben wurde.

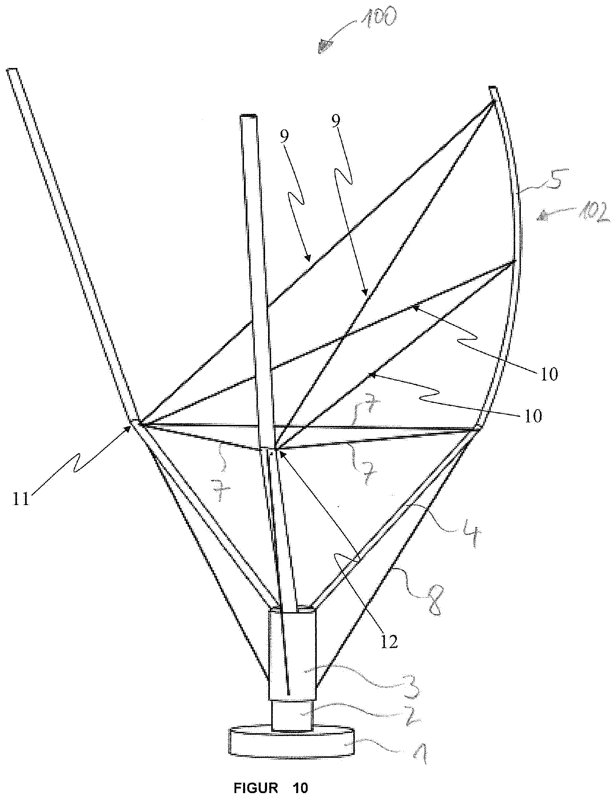

Figur 10 zeigt einen oberen Abschnitt 5 von einem der Rotorblätter der Windkraftanlage 100, der unter der Vorspannung der Versteifungsdrähte 9, 10 nach innen gebogen wurde. Die Versteifungsdrähte 9, 10 sind an den Befestigungspunkten 11, 12 befestigt, die sich in der Nähe der beiden gegenüberliegenden Eckpunkte der Grundfläche der inversen Pyramide befinden, wie dies zuvor anhand der Figur 4 beschrieben wurde. Die Versteifungsdrähte 9, 10 könnten auch an den gleichen Befestigungspunkte 6 für die Spanndrähte 7 der inversen Pyramide befestigt sein. Durch eine Zunahme der auf die Versteifungsdrähte 9, 10 wirkenden Spannung wird der obere Abschnitt 5 des Rotorblatts nach innen bewegt, um ein gebogenes Rotorblatt zu bilden.

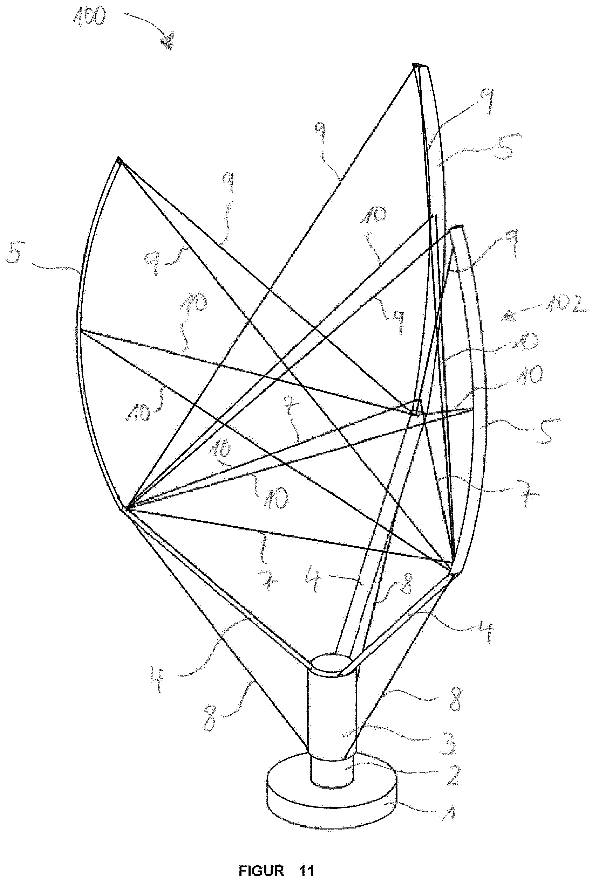

Figur 11 zeigt alle Rotorblätter der Windkraftanlage 100 in ihrer endgültigen nach innen gebogenen Position mit den entsprechenden Versteifungsdrähten 9, 10, die an den Befestigungspunkten 11, 12 (oder an den Befestigungspunkten 6) in der Nähe der Eckpunkte der Grundfläche der inversen Pyramide befestigt sind. Es wird darauf hingewiesen, dass zusätzliche Versteifungsdrähte (in Figur 11 nicht gezeigt) verwendet werden können, um den oberen Abschnitt 5 eines Rotorblatts auch zwischen den Abschnitten, wo die Versteifungsdrähte 9, 10 an den Abschnitt 5 angreifen, zu halten oder zu stützen. Es ist besonders vorteilhaft, wenn für ein bestimmtes Rotorblatt alle Versteifungsdrähte an den gleichen Befestigungspunkten der gegenüberliegenden Rotorblätter befestigt sind.

Falls eine Windkraftanlage 100 mehr als drei Rotorblätter aufweist, sind die Rotorblätter vorzugsweise unterteilt in Gruppen von jeweils drei Rotorblättern in jeder Gruppe. Die oberen Abschnitte 5 der Rotorblätter von jeder Gruppe sind dann an den jeweils gegenüberliegenden Ecken der Grundfläche der inversen Pyramide gehalten, die der jeweiligen Gruppe entspricht. Der Rotor 102 verfügt also vorzugsweise über ein Anzahl Nx3 an Rotorblättern, wobei N eine natürliche positive Zahl größer Null ist. Dabei sind jeweils drei Rotorblätter zu einer Gruppe zusammengefasst, innerhalb der dann eine inverse Pyramide gebildet ist. Bei einem Rotor 102 mit sechs Rotorblättern gibt es also zwei inverse Pyramiden. Die Pyramiden haben also vorzugsweise eine dreieckige Grundfläche, insbesondere eine Grundfläche in Form eines gleichschenkligen und gleichwinkligen Dreiecks.

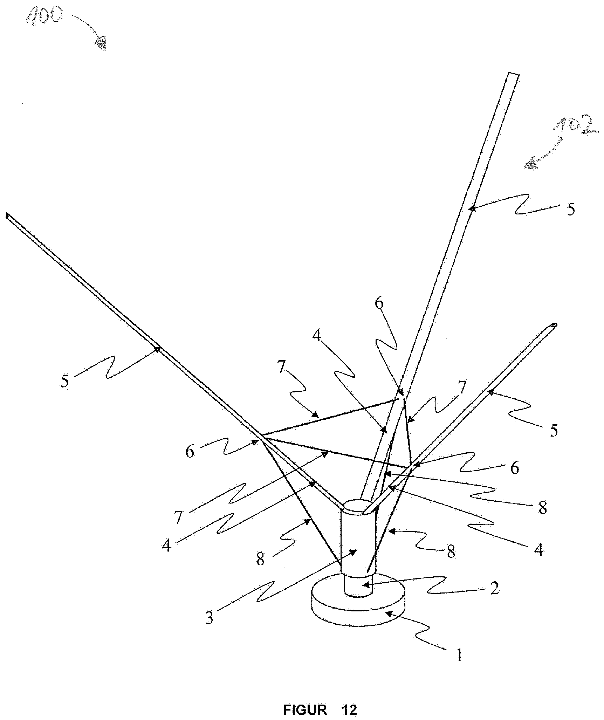

Figuren 12-15 zeigen noch ein anderes Ausführungsbeispiel einer erfindungsgemäßen Windkraftanlage 100, d.h. eine vertikale Windkraftanlage 100 ohne ein zentrales langgestrecktes Stütz- oder Tragelement, bei dem die oberen Abschnitte 5 der Rotorblätter, die ursprünglich eine gerade Längserstreckung aufweisen, nach innen gebogen sind, um gebogene Rotorblätter zu bilden. Dies wird dadurch erreicht, dass die Versteifungsdrähte 9, 10, welche die oberen Abschnitte 5 halten und stützen, unter Vorspannung gebracht werden. Bei diesem Beispiel verläuft also in dem in Figur 12 gezeigten entspannten Zustand (ohne Versteifungsdrähte 9, 10) die Längserstreckung der unteren Abschnitte 4 in einem Winkel von etwa 180° bezüglich der Längserstreckung der oberen Abschnitte 5. die inverse Pyramide es genau der gleiche wie bei den zuvor beschriebenen Ausführungsbeispielen.

Figur 12 zeigt eine Windkraftanlage 100 mit einem Rotor 102 mit drei Rotorblättern, die sich in einem entspannten Zustand befinden. Mit dem Bezugszeichen 6 sind wiederum ausgewählte Befestigungspunkte entlang des unteren Abschnitts 4 und der Rotorblätter bezeichnet. Spanndrähte 7 sichern die Befestigungspunkte 6 aneinander, während Versteifungsdrähte 8 die gleichen Befestigungspunkte 6 an einem unteren Teil der rotierenden Nabe 3 in der Nähe des Sockels 1 befestigen. Wenn die Drähte 7, 8 unter Vorspannung gesetzt werden, führen sie zu einer Versteifung des Teils der Rotorblätter, der sich von den Befestigungspunkten 6 zu der Nabe 3 erstreckt und bilden so eine stabile Plattform, welche die Form einer inversen Pyramide hat, wobei die Befestigungspunkte 6 die Eckpunkte der Grundfläche der inversen Pyramide bilden. Diese inverse Pyramide ist die gleiche wie bei den zuvor beschriebenen Ausführungsbeispielen aus den Figuren 3 und 9, bei denen die unteren Abschnitte 4 und die oberen Abschnitte 5 der Rotorblätter in einem Winkel aneinander befestigt sind. Der Winkel, in dem die unteren Abschnitte 4 und die oberen Abschnitte 5 der Rotorblätter aneinander befestigt sind, hat keinerlei Auswirkung auf die Konstruktion der inversen Pyramide, da die inverse Pyramide durch die unteren Abschnitte 4 der Rotorblätter gebildet ist, die für alle Ausführungsbeispiele gleichermaßen vorgesehen und ausgebildet sind.

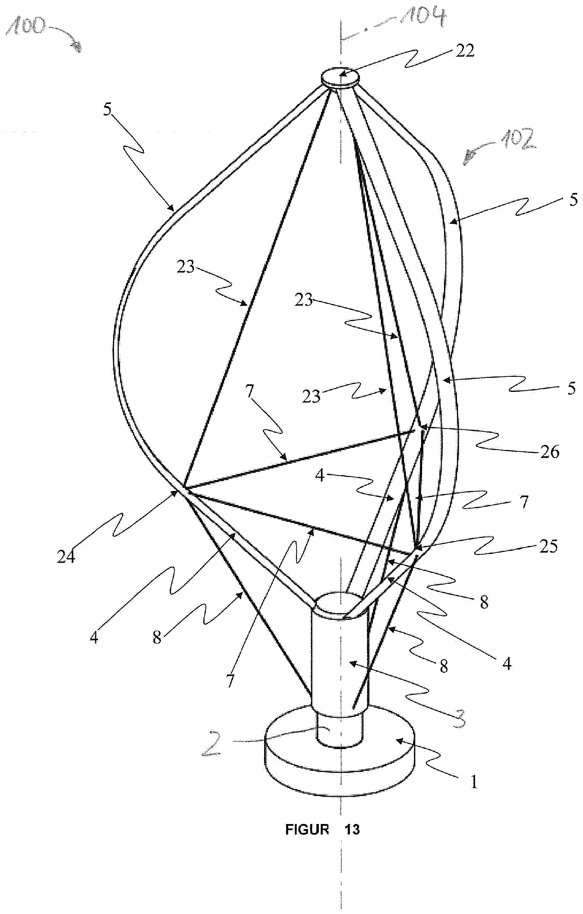

Figur 13 zeigt alle Rotorblätter der Windkraftanlage 100 mit dem Rotor 102 mit drei Rotorblättern in ihren endgültigen gebogenen Positionen und an einem gemeinsamen Verbindungselement 22 befestigt, durch das die Drehachse 104 verläuft. Dieses Verbindungselement 22 ist mittels Haltedrähten 23 an Befestigungspunkten 24, 25 und 26 gehalten, die in der Nähe der Befestigungspunkte 6 bzw. den Eckpunkten der Grundfläche der inversen Pyramide angeordnet sind.

Die Haltedrähte 23 könnten an den gleichen Befestigungspunkte 6 befestigt sein, die die Eckpunkte der Grundfläche der inversen Pyramide definieren, aber grundsätzlich könnten die Befestigungspunkte 24, 25 und 26 auch andere Befestigungspunkte sein, die vorzugsweise jedoch in der Nähe der Befestigungspunkte 6 angeordnet sind.

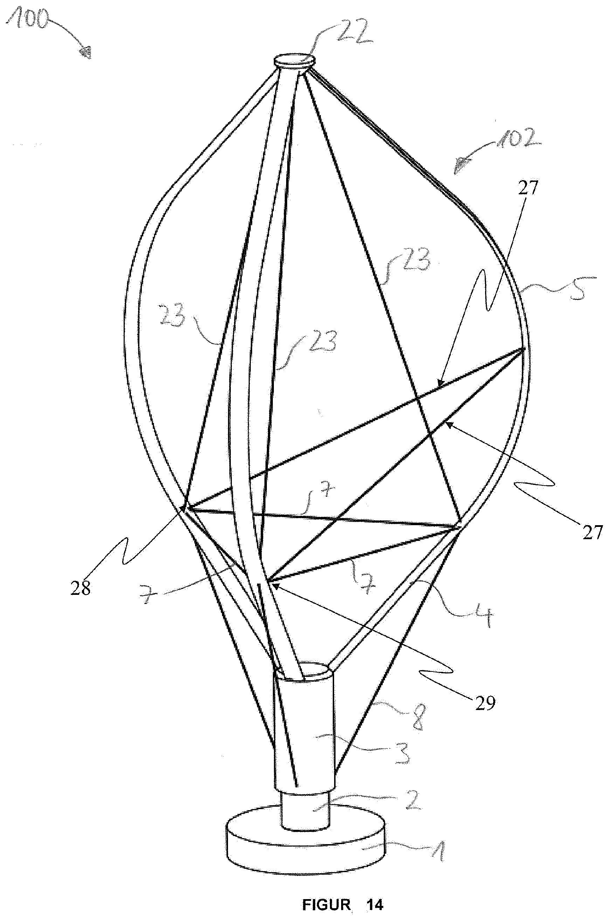

Figur 14 zeigt weitere Haltedrähte 27, die etwa in der Mitte der Längserstreckung der oberen Abschnitte 5 der Rotorblätter eine Stütz- oder Haltefunktion bieten. In Figur 14 sind die Haltedrähte 27 lediglich für eines der Rotorblätter eingezeichnet. Die Haltedrähte 27 sind an Befestigungspunkten 28, 29 befestigt, die in der Nähe der dem Rotorblatt gegenüberliegenden beiden Eckpunkte der Grundfläche der inversen Pyramide angeordnet sind. Die weiteren Haltedrähte 27 könnten an den gleichen Befestigungspunkten 6 befestigt sein, welche die Eckpunkte der Grundfläche der inversen Pyramide definieren. Grundsätzlich könnten die Befestigungspunkte 28, 29 auch andere Befestigungspunkte sein, die vorzugsweise jedoch in der Nähe der Befestigungspunkte 6 angeordnet sind.

Zusätzliche Haltedrähte (nicht gezeigt) könnten verwendet werden, um den oberen Abschnitt 5 eines Rotorblatts auch zwischen den Abschnitten, wo die Haltedrähte 23, 27 an den Abschnitt 5 angreifen, zu halten oder zu stützen. Es ist besonders vorteilhaft, wenn für ein bestimmtes Rotorblatt alle Haltedrähte an den gleichen Befestigungspunkten der gegenüberliegenden Rotorblätter befestigt sind.

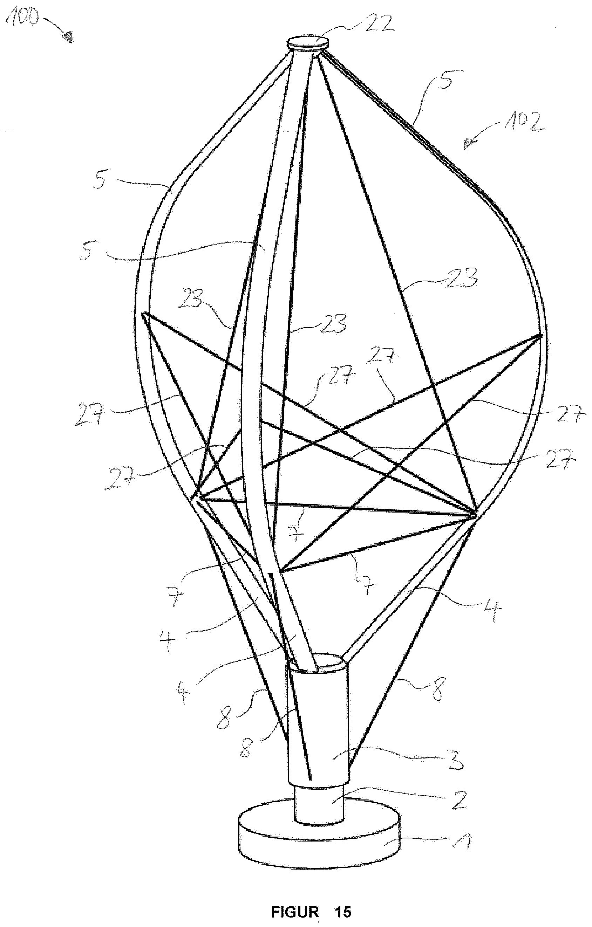

Figur 15 zeigt die Windkraftanlage 100 aus den Figuren 13 und 14 mit allen Haltedrähten 27, welche die Rotorblätter stützen und halten. Falls die Windkraftanlage 100 mehr als 3 Rotorblätter aufweist, sind die Rotorblätter in Gruppen unterteilt mit jeweils 3 Rotorblättern je Gruppe. Die oberen Abschnitte 5 der Rotorblätter einer jeden Gruppe sind dann an den gegenüberliegenden Ecken der inversen Pyramide befestigt, die der entsprechenden Gruppe entspricht.

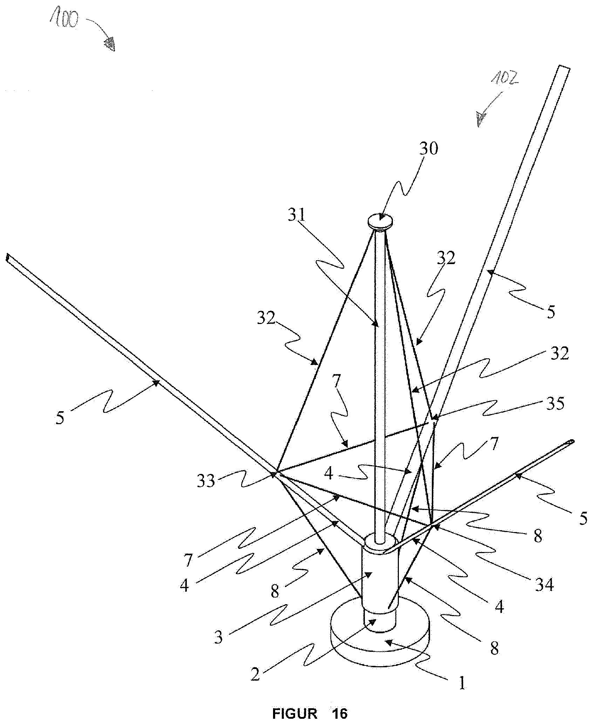

Figuren 16 und 17 zeigen noch ein anderes Ausführungsbeispiel einer erfindungsgemäßen Windkraftanlage 100, d.h. eine vertikale Windkraftanlage 100 mit einem zentralen langgestreckten Stütz- oder Tragelement 31, das mit seinem unteren Ende an der rotierenden Nabe 3 befestigt ist. Das zentrale Stütz- oder Tragelement 31 ist dabei intern mittels Befestigungsdrähten 32 an Befestigungspunkten 33, 34 und 35, welche die Eckpunkte der Grundfläche der inversen Pyramide bilden, oder an den Befestigungspunkten 6 oder an anderen Befestigungspunkten, die in der Nähe der Ecken der Grundfläche der inversen Pyramide angeordnet sind, befestigt und gehalten. Die Rotorblätter, die in ihrem entspannten Zustand zunächst eine gerade Längserstreckung aufweisen, werden nach innen gebogen, um gebogene Rotorblätter zu bilden. Das obere distale Ende der oberen Abschnitte 5 der Rotorblätter ist an einem gemeinsamen Verbindungselement 30 befestigt, das seinerseits an der Spitze des zentralen Stütz- oder Tragelements 31 befestigt ist. Bei dieser Ausführungsform sind trotz der gebogenen Rotorblätter keine Versteifungsdrähte erforderlich, um den oberen Abschnitt 5 der Rotorblätter zu halten und zu stützen und nach innen zu biegen.

Die inverse Pyramide ist auf die gleiche Weise konstruiert, wie dies zuvor unter Bezugnahme auf Figur 12 beschrieben wurde. Zunächst werden Befestigungspunkte 6 (zur Verbesserung der Klarheit in Figur 16 nicht gezeigt) ausgewählt entlang der unteren Abschnitte 4 der Rotorblätter. Spanndrähte 7 verbinden die Befestigungspunkte 6 miteinander während Versteifungsdrähte 8 die Befestigungspunkte 6 an dem unteren Teil der rotierenden Nabe 3 in der Nähe des Sockels 1 befestigen. Wenn die Drähte 7, 8 unter Vorspannung gesetzt werden, erzeugt dies eine stabile Plattform im Bereich des Sockels der Windkraftanlage 100, welche die Form einer inversen Pyramide aufweist, wobei die Ecken der Grundfläche der Pyramide durch die Befestigungspunkte 6 definiert sind.

In Figur 16 sind die unteren Abschnitte 4 und die oberen Abschnitte 5 der Rotorblätter aneinander befestigt, um gerade Rotorblätter zu bilden, wie sie beispielsweise auch in Figur 12 gezeigt sind. Der untere Abschnitt 4 der Rotorblätter ist fest an der rotierenden Nabe 3 befestigt, wobei sich die Rotorblätter im entspannten Zustand ausgehend von der Nabe 3 schräg nach außen und oben erstrecken. Das Verbindungselement 30 ist fest an der Spitze des zentralen Stütz- oder Tragelements 31 befestigt. Befestigungspunkte 33, 34 und 35 werden entlang der unteren Abschnitte 4 oder der oberen Abschnitte 5 der Rotorblätter gewählt. Befestigungsdrähte 32 halten und stützen das Verbindungselement 30 an den Befestigungspunkten 33, 34 und 35. Wenn die Befestigungsdrähte 32 unter Vorspannung gesetzt werden, führen sie zu einer Versteifung des zentralen Stütz- oder Tragelements 31 und erzeugen ein stabiles System, welches das zentrale Stütz- oder Tragelement 31 an der inversen Pyramide im Bereich des Sockels der Windkraftanlage 100 befestigt. Das zentrale Stütz- oder Tragelement 31 rotiert zusammen mit dem Verbindungselement 30 und den Befestigungsdrähten 32 sowie mit der inversen Pyramide im Bereich des Sockels. Befestigungsdrähte 32 können auch an den Befestigungspunkten 6 befestigt werden, welche die Ecken der Grundfläche der inversen Pyramide bilden, wie zuvor unter Bezugnahme auf Figur 12 beschrieben. Die Befestigungsdrähte 32 können auch an verschiedenen Befestigungspunkten 33, 34 und 35 befestigt werden, wie oben beschrieben, aber diese Befestigungspunkte sind vorzugsweise in der Nähe der Befestigungspunkte 6 bzw. den Ecken der Grundfläche der inversen Pyramide angeordnet.

Figur 17 zeigt alle Rotorblätter in ihrer endgültigen gebogenen Position, in der sie mit ihren distalen Enden an dem gemeinsamen Verbindungselement 30 an der Spitze des zentralen Stütz- oder Tragelements 31 befestigt sind.

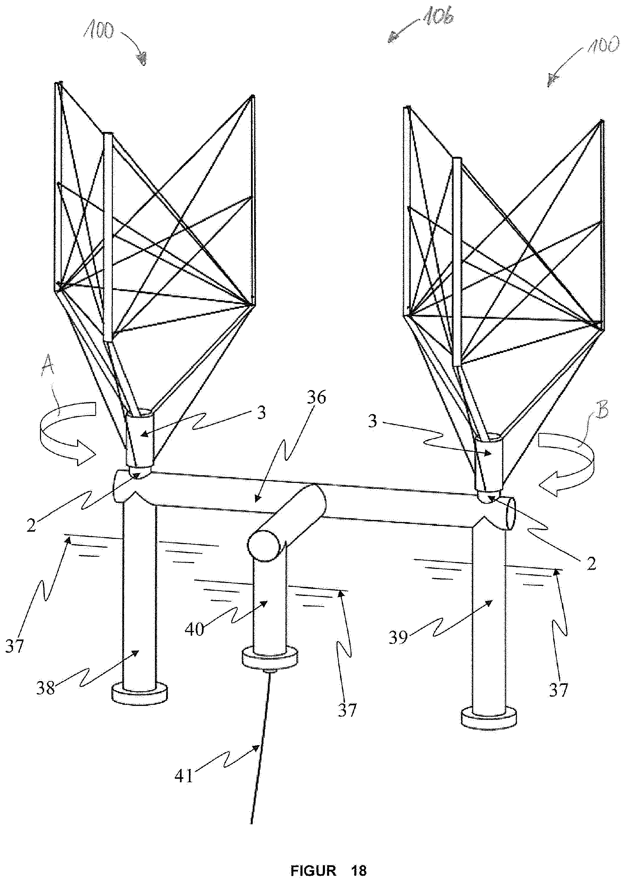

Figur 18 zeigt einen erfindungsgemäßen schwimmenden Windpark 106 mit zwei vertikalen Windkraftanlagen 100 ohne ein zentrales Stütz- oder Tragelement, die auf einer schwimmenden rohrartigen Plattform 36 befestigt sind. Die hier verwendete Art von Windkraftanlage 100 wurde zuvor anhand der Figuren 3-5 beschrieben. Der Sockel 1 oder die Aufnahme 2 der Windkraftanlage 100 könnten direkt an der schwimmenden Plattform 36 befestigt sein. In Figur 18 wird der Sockel 1 der Windkraftanlage 100 weggelassen und die Aufnahme 2 direkt an der schwimmenden Plattform 36 befestigt.

Die schwimmende Plattform 36 weist eine rohrartige Konstruktion auf, da sich eine derartige Plattform besonders einfach und kostengünstig realisieren lässt. Selbst verständlich kann die Plattform 36 auch als eine beliebig andere Art von schwimmender Plattform ausgebildet sein, wie beispielsweise als eine Halbtaucher-Plattform. Die schwimmende Plattform 36 umfasst drei schwimmende Kammern 38, 39 und 40, die unterhalb der Wasserlinie 37 angeordnet sind genau und an deren tiefsten Punkten jeweils Ballast für zusätzliche Stabilität angeordnet ist. Die beiden Windkraftanlagen 100, die auf der Plattform 36 installiert sind, sind ausgebildet, in entgegengesetzte Richtungen A, B zu drehen, um Drehmoment zu kompensieren, dass auf die schwimmende Plattform 36 durch jede der Windkraftanlagen 100 wirken kann. Jede Windkraftanlage 100 erzeugt ein Drehmoment um ihre vertikale Drehachse 104. Falls die beiden Windkraftanlagen 100 in entgegengesetzte Richtungen A, B rotieren, kompensieren sich die Drehmomente. Die schwimmende Plattform 36 ist mittels eines oder mehrerer Taue 41, vorzugsweise aus Metall, oder Ketten am Meeresgrund befestigt.

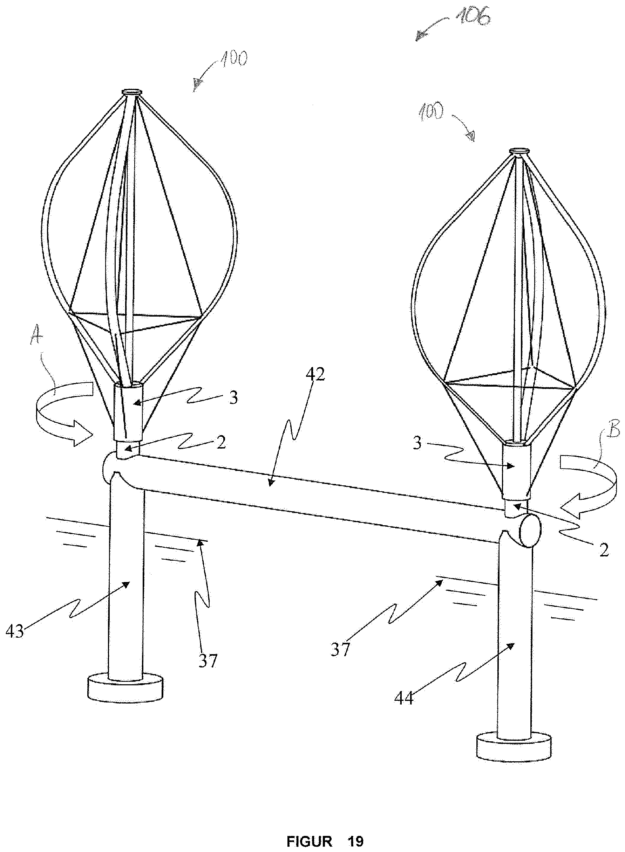

Figur 19 zeigt zwei vertikale Windkraftanlagen 100 jeweils mit einem intern gehaltenen Stütz- oder Tragelement 31 (vergleiche beispielsweise Figur 17), die auf einer anderen Art von schwimmender Plattform 42 befestigt sind, die nur zwei schwimmende Kammern 43 und 44 aufweist. Die Aufnahme 2 der beiden Windkraftanlagen 100 ist fest an der rohrartigen Plattform 42 befestigt. Die beiden Windkraftanlagen 100 bzw. deren Rotoren 102 rotieren in entgegengesetzte Richtungen A, B, um Drehmoment zu kompensieren, das durch jede der Windkraftanlagen 100 auf die schwimmende Plattform 42 wirkt.

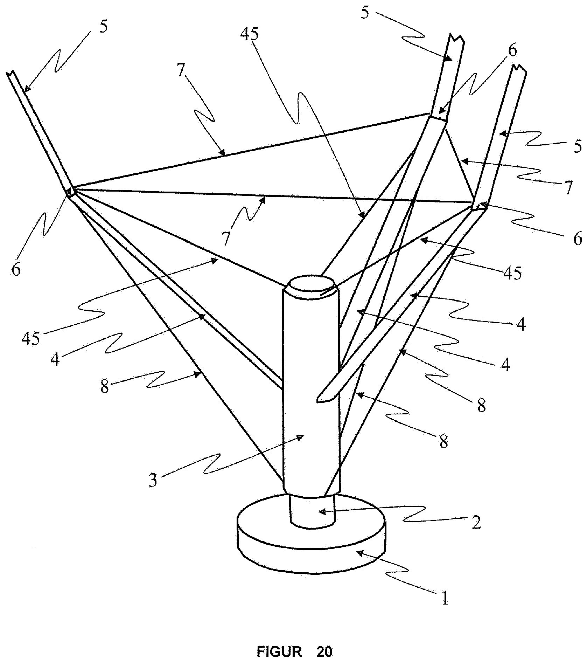

Figur 20 zeigt eine alternative Ausführungsform der inversen Pyramide an der Basis oder dem Sockel 1 der Windkraftanlage 100, wobei der untere Abschnitt 4 der Rotoren etwa in der Mitte (zwischen oberem und unterem Ende) statt in einem oberen Abschnitt der rotierenden Nabe 3 (vergleiche die vorangegangenen Ausführungsbeispiele) an dieser fest befestigt ist. Diese Ausführungsform ermöglicht es, zusätzliche Versteifungsdrähte 45 vorzusehen, welche die Eckpunkte der Grundfläche der inversen Pyramide (die Befestigungspunkte 6) mit dem oberen Abschnitt der rotierenden Nabe 3 verbinden. Die in Figur 20 gezeigte inverse Pyramide wird durch die rotierende Nabe 3, den unteren Abschnitt 4 der Rotorblätter zusammen mit den entsprechenden Befestigungspunkten 6, den Spanndrähten 7, welche die Befestigungspunkte 6 miteinander verbinden, und den Versteifungsdrähte 8 und 45 gebildet, welche die gleichen Befestigungspunkte 6 mit dem oberen Abschnitt der rotierenden Nabe 3 verbinden. Alle Drähte 7, 8 und 45 stehen unter Vorspannung, um eine Druckbelastung auf die unteren Abschnitte 4 der Rotorblätter von den Befestigungspunkten 6 zu der rotierenden Nabe 3 auszuüben und um eine stabile Plattform zu erzeugen, welche die Form der inversen Pyramide hat, wobei die Eckpunkte der Grundfläche der inversen Pyramiden durch die Befestigungspunkte 6 an dem unteren Abschnitt 4 der Rotorblätter gebildet wird.

Abgesehen von den zusätzlichen Versteifungsdrähten 45 ist die in Figur 20 gezeigte inverse Pyramide die gleiche wie die inversen Pyramiden der anderen, zuvor beschriebenen Ausführungsbeispiele der Figuren 3, 9 und 12.

In allen Figuren sind der untere Abschnitt 4 sowie der obere Abschnitt 5 der Rotorblätter jeweils in ihrem ursprünglichen (ungebogenen) Zustand als gerade Abschnitt 4, 5 dargestellt. Ganz allgemein können die Abschnitte 4, 5 gerade und in einem bestimmten Winkel aneinander befestigt sein, wie in den Figuren 3 und 9 gezeigt. Sie können aber auch gerade und aneinander befestigt sein, um gerade Rotorblätter zu bilden, wie in den Figuren 12 und 16 gezeigt. Oder aber die Abschnitte 4, 5 sind gebogen in ihrem ursprünglichen Zustand und gerade (entlang der lokalen Tangenten an ihrer Berührungslinie) oder in einem Winkel aneinander befestigt. Des Weiteren könnten die Abschnitte 4, 5 der Rotorblätter zusätzlich mittels vorgespannter Drähte gebogen sein, wie in der vorliegenden Beschreibung beschrieben und in Figur 11 gezeigt, wenn sie zu dem Rotor 102 der Winkraftanlage 100 zusammengebaut werden. Im ursprünglichen Zustand gebogene Rotorblätter sind hier nicht dargestellt, aber es ist klar, dass die Abschnitte 4, 5 der Rotorblätter ih ihrem ursprünglichen Zustand jeweils gerade oder gebogen sein können. Selbstverständlich können auch an den Drähten 23, 27, 32 und/oder 45 Verkleidungselemente 15 (vgl. Figur 7) angeordnet sein.

## Patentansprüche

1. Windkraftanlage (100) mit einem um eine vertikale Drehachse (104) drehbaren Rotor (102) mit einer rotierenden Nabe (3) und mehreren entlang eines Außenumfangs des Rotors (102) angeordneten Rotorblättern, die jeweils einen unteren Abschnitt (4) und einen an einem oberen distalen Ende des unteren Abschnitts (4) befestigten oberen Abschnitt (5) aufweisen, wobei untere proximale Enden der unteren Abschnitte (4) der Rotorblätter jeweils an einem ersten Befestigungsabschnitt an der rotierenden Nabe (3) befestigt sind, wobei die unteren Abschnitte (4) der Rotorblätter zusammen mit der Nabe (3), mit Spanndrähten (7) und mit Versteifungsdrähten (8) eine inverse Pyramide bilden, wobei die Spanndrähte (7) erste Befestigungspunkte (6) an den Rotorblättern im Bereich der distalen Enden der unteren Abschnitte (4) der Rotorblätter miteinander verbinden und **dadurch gekennzeichnet, dass** die Versteifungsdrähte (8) die ersten Befestigungspunkte (6) mit einem zweiten Befestigungsabschnitt der Nabe (3) verbinden, wobei die zweiten Befestigungsabschnitte unterhalb der ersten Befestigungsabschnitte angeordnet sind, und wobei die Spanndrähte (7) und die Versteifungsdrähte (8) unter Vorspannung stehen.

2. Windkraftanlage (100) nach Anspruch 1, **dadurch gekennzeichnet, dass** die Versteifungsdrähte (8) die ersten Befestigungspunkte (6) an den zweiten Befestigungsabschnitten mit einem unteren Abschnitt der Nabe (3) verbinden.

3. Windkraftanlage (100) nach Anspruch 1 oder 2, **dadurch gekennzeichnet, dass** die unteren proximalen Enden der unteren Abschnitte (4) der Rotorblätter jeweils an dem ersten Befestigungsabschnitt an einem oberen Abschnitt der Nabe (3) befestigt sind.

4. Windkraftanlage (100) nach Anspruch 1 oder 2, **dadurch gekennzeichnet, dass** die unteren proximalen Enden der unteren Abschnitte (4) der Rotorblätter jeweils an dem ersten Befestigungsabschnitt an einem mittleren Abschnitt der Nabe (3) befestigt sind.

5. Windkraftanlage (100) nach Anspruch 4, **dadurch gekennzeichnet, dass** der Rotor (102) weitere Versteifungsdrähte (45) aufweist, welche die ersten Befestigungspunkte (6) mit einem oberen Abschnitt der Nabe (3) verbinden.

6. Windkraftanlage (100) nach einem der vorangegangenen Ansprüche, **dadurch gekennzeichnet, dass** der Rotor (102) eine Anzahl Nx3 an Rotorblättern aufweist, wobei N eine natürliche Zahl ohne Null ist.

7. Windkraftanlage (100) nach Anspruch 6, **dadurch gekennzeichnet, dass** für N>1 jeweils drei Rotorblätter zu einer Gruppe zusammengefasst sind, wobei innerhalb einer jeden Gruppe eine separate inverse Pyramide gebildet ist.

8. Windkraftanlage (100) nach einem der vorangegangenen Ansprüche, **dadurch gekennzeichnet, dass** der Rotor (102) erste Versteifungsdrähte (9) aufweist, welche für jedes Rotorblatt ein oberes distales Ende des oberen Abschnitts (5) des Rotorblatts mit zweiten Befestigungspunkten (11, 12) an einem unteren proximalen Ende der oberen Abschnitte (5) oder an dem oberen distalen Ende der unteren Abschnitte (4) von dem Rotorblatt gegenüberliegenden Rotorblättern verbinden.

9. Windkraftanlage (100) nach Anspruch 8, **dadurch gekennzeichnet, dass** der Rotor (102) weitere Versteifungsdrähte (10) aufweist, welche für jedes Rotorblatt einen mittleren Bereich des oberen Abschnitts (5), der zwischen dem distalen Ende und dem proximalen Ende des Abschnitts (5) liegt, mit den zweiten Befestigungspunkten (11, 12) der dem Rotorblatt gegenüberliegenden Rotorblätter verbinden.

10. Windkraftanlage (100) nach Anspruch 8 oder 9, **dadurch gekennzeichnet, dass** die zweiten Befestigungspunkte (10, 11) identisch mit den ersten Befestigungspunkten (6) sind.

11. Windkraftanlage (100) nach einem der Ansprüche 8 bis 10, **dadurch gekennzeichnet, dass** die ersten Versteifungsdrähte (9) und die zweiten Versteifungsdrähte (10) unter Vorspannung stehen und die oberen Abschnitte (5) der Rotorblätter radial nach innen ziehen und dort halten, so dass sich nach innen gebogene Rotorblätter des Rotors (102) ergeben.

12. Windkraftanlage (100) nach einem der Ansprüche 1 bis 7, **dadurch gekennzeichnet, dass** der Rotor (102) Haltedrähte (23) aufweist, welche ein gemeinsames Verbindungselement (22), an dem obere distale Enden der oberen Abschnitte (5) von nach innen gebogenen Rotorblätter befestigt sind, an dritten Befestigungspunkten (24, 25, 26) an unteren proximalen Enden der oberen Abschnitte (5) oder an oberen distalen Enden der unteren Abschnitte (4) der Rotorblätter halten.

13. Windkraftanlage (100) nach Anspruch 12, **dadurch gekennzeichnet, dass** der Rotor (102) weitere Haltedrähte (27) aufweist, welche für jedes Rotorblatt einen mittleren Bereich des oberen Abschnitts (5), der zwischen dem distalen Ende und dem proximalen Ende des Abschnitts (5) liegt, mit den dritten Befestigungspunkten (24, 25, 26) der dem Rotorblatt jeweils gegenüberliegenden Rotorblätter verbinden.

14. Windkraftanlage (100) nach Anspruch 12 oder 13, **dadurch gekennzeichnet, dass** die dritten Befestigungspunkte (24, 25, 26) identisch mit den ersten Befestigungspunkten (6) sind.

15. Windkraftanlage (100) nach einem der vorangehenden Ansprüche, **dadurch gekennzeichnet, dass** an einem oder mehreren der Drähte (8; 9; 10; 23; 27; 32; 45) des Rotors (102) Verkleidungselemente (15) zur Verringerung des Luftwiderstands der Drähte (8; 9; 10; 23; 27; 32; 45) bei drehendem Rotor (102) angeordnet sind.

16. Schwimmender Windpark (106) umfassend eine schwimmende Plattform (36, 42) mit mehreren darauf befestigten Windkraftanlagen (100), **dadurch gekennzeichnet, dass** die Windkraftanlagen (100) nach einem der vorangehenden Ansprüche ausgebildet sind.

17. Windpark (106) nach Anspruch 16, **dadurch gekennzeichnet, dass** die Rotoren (102) von jeweils zwei Windkraftanlagen (100) des Windparks (106) in entgegengesetzte Richtungen (A, B) drehen.

## Claims

1. Wind turbine (100) comprising a rotor (102) rotatable about a vertical axis of rotation (104) and having a rotating hub (3) and a plurality of rotor blades disposed along an outer periphery of the rotor (102), each rotor blade having a lower portion (4) and an upper portion (5) attached to an upper distal end of the lower portion (4), lower proximal ends of the lower portions (4) of the rotor blades each being attached to the rotating hub (3) at a first attachment portion, the lower portions (4) of the rotor blades together with the hub (3), tension wires (7) and stiffening wires (8) forming an inverse pyramid, whereby the tension wires (7) interconnect first fastening points (6) on the rotor blades in the region of the distal ends of the lower portions (4) of the rotor blades with each other, and **characterized in that** the stiffening wires (8) connect the first fastening points (6) with a second attachment portion of the hub (3), the second attachment portions being arranged below the first attachment portions, and the tension wires (7) and the stiffening wires (8) being under pretension.

2. Wind turbine (100) according to claim 1, **characterized in that** the stiffening wires (8) connect the first fastening points (6) on the second attachment portioins to a lower section of the hub (3).

3. Wind turbine (100) according to claim 1 or 2, **characterized in that** the lower proximal ends of the lower portions (4) of the rotor blades are each attached to the first attachment portion at an upper section of the hub (3).

4. Wind turbine (100) according to claim 1 or 2, **characterized in that** the lower proximal ends of the lower portions (4) of the rotor blades are each attached to the first attachment portion at a middle section of the hub (3).

5. Wind turbine (100) according to claim 4, **characterized in that** said rotor (102) comprises further stiffening wires (45) connecting said first fastening points (6) to an upper section of said hub (3).

6. Wind turbine (100) according to any one of the preceding claims, **characterized in that** the rotor (102) comprises a number Nx3 of rotor blades, where N is a non-zero natural number.

7. Wind turbine (100) according to claim 6, **characterized in that** for N>1 three rotor blades are combined into a group, wherein a separate inverse pyramid is formed within each group.

8. Wind turbine (100) according to any one of the preceding claims, **characterized in that** the rotor (102) comprises first stiffening wires (9) connecting, for each rotor blade, an upper distal end of the upper portion (5) of the rotor blade to second fastening points (11, 12) at a lower proximal end of the upper portions (5) or at the upper distal end of the lower portions (4) of rotor blades opposite said rotor blade.

9. Wind turbine (100) according to claim 8, **characterized in that** the rotor (102) comprises further stiffening wires (10) connecting, for each rotor blade, a central region of the upper portion (5) located between the distal end and the proximal end of the portion (5) to the second fastening points (11, 12) of the rotor blades opposite said rotor blade.

10. Wind turbine (100) according to claim 8 or 9, **characterized in that** the second fastening points (11, 12) are identical to the first fastening points (6).

11. Wind turbine (100) according to any one of claims 8 to 10, **characterized in that** the first stiffening wires (9) and the second stiffening wires (10) are under pretension and pull the upper portions (5) of the rotor blades radially inwardly and hold them there, resulting in inwardly curved rotor blades of the rotor (102).

12. Wind turbine (100) according to any one of claims 1 to 7, **characterised in that** the rotor (102) comprises retaining wires (23) which hold a common connecting member (22), to which upper distal ends of the upper portions (5) of inwardly curved rotor blades are attached, at third fastening points (24, 25, 26) at lower proximal ends of the upper portions (5) or at upper distal ends of the lower portions (4) of the rotor blades.

13. Wind turbine (100) according to claim 12, **characterized in that** the rotor (102) comprises further retaining wires (27) which, for each rotor blade, connect a central region of the upper portion (5) located between the distal end and the proximal end of the portion (5) to the third fastening points (24, 25, 26) of the rotor blades respectively opposite said rotor blade.

14. Wind turbine (100) according to claim 12 or 13, **characterized in that** the third fastening points (24, 25, 26) are identical to the first fastening points (6).

15. Wind turbine (100) according to any one of the preceding claims, **characterized in that** on one or more of the wires (8; 9; 10; 23; 27; 32; 45) of the rotor (102), fairing elements (15) are provided for reducing the drag of the wires (8; 9; 10; 23; 27; 32; 45) when the rotor (102) is rotating.

16. Floating wind farm (106) comprising a floating platform (36, 42) with a plurality of wind turbines (100) mounted thereon, **characterized in that** the wind turbines (100) are designed according to any one of the preceding claims.

17. Wind farm (106) according to claim 16, **characterized in that** the rotors (102) of each two wind turbines (100) of the wind farm (106) rotate in opposite directions (A, B).

## Revendications

1. Eolienne (100) comprenant un rotor (102) pouvant tourner autour d'un axe de rotation vertical (104), comprenant un moyeu rotatif (3) et une pluralité de pales de rotor disposées le long d'une périphérie extérieure du rotor (102), chacune comprenant une partie inférieure (4) et une partie supérieure (5) fixée à une extrémité distale supérieure de la partie inférieure (4), les extrémités proximales inférieures des parties inférieures (4) des pales de rotor étant fixées chacune à une première partie de fixation au moyeu rotatif (3), les parties inférieures (4) des pales de rotor avec le moyeu (3), avec des fils de tension (7) et avec des fils de renforcement (8) forment une pyramide inversée, les fils de tension (7) reliant entre eux des premiers points de fixation (6) sur les pales de rotor dans la zone des extrémités distales des parties inférieures (4) des pales de rotor et **caractérisé en ce que** les fils de renforcement (8) relient les premiers points de fixation (6) à une deuxième partie de fixation du moyeu (3), les deuxièmes parties de fixation étant situées en dessous des premières parties de fixation, et les fils de tension (7) et les fils de renforcement (8) étant sous précontrainte.

2. Eolienne (100) selon la revendication 1, **caractérisée en ce que** les fils de renforcement (8) relient les premiers points de fixation (6) sur les deuxièmes parties de fixation à une partie inférieure du moyeu (3).

3. Éolienne (100) selon la revendication 1 ou 2, **caractérisée en ce que** les extrémités proximales inférieures des parties inférieures (4) des pales de rotor sont fixées respectivement à la première partie de fixation à une partie supérieure du moyeu (3).

4. Eolienne (100) selon la revendication 1 ou 2, **caractérisée en ce que** les extrémités proximales inférieures des parties inférieures (4) des pales du rotor sont fixées respectivement à la première partie de fixation à une partie centrale du moyeu (3).

5. Eolienne (100) selon la revendication 4, **caractérisée en ce que** le rotor (102) comprend d'autres fils de renforcement (45) reliant les premiers points de fixation (6) à une partie supérieure du moyeu (3).

6. Eolienne (100) selon l'une des revendications précédentes, **caractérisée en ce que** le rotor (102) comprend un nombre Nx3 de pales de rotor, N étant un entier naturel non nul.

7. Eolienne (100) selon la revendication 6, **caractérisée en ce que**, pour N>1, trois pales de rotor sont respectivement réunies en un groupe, une pyramide inverse séparée étant formée de chaque groupe.

8. Eolienne (100) selon l'une des revendications précédentes, **caractérisée en ce que** le rotor (102) comporte des premiers fils de renforcement (9) reliant, pour chaque pale de rotor, une extrémité distale supérieure de la partie supérieure (5) de la pale de rotor à des seconds points de fixation (11, 12) à une extrémité proximale inférieure des parties supérieures (5) ou à l'extrémité distale supérieure des parties inférieures (4) de pales de rotor opposées à la pale de rotor.

9. Eolienne (100) selon la revendication 8, **caractérisée en ce que** le rotor (102) comprend d'autres fils de renforcement (10) reliant, pour chaque pale de rotor, une zone centrale de la partie supérieure (5), située entre l'extrémité distale et l'extrémité proximale de la partie (5), aux seconds points de fixation (11, 12) des pales de rotor opposées à la pale de rotor.

10. Eolienne (100) selon la revendication 8 ou 9, **caractérisée en ce que** les seconds points de fixation (11, 12) sont identiques aux premiers points de fixation (6).

11. Eolienne (100) selon l'une des revendications 8 à 10, **caractérisée en ce que** les premiers fils de renforcement (9) et les seconds fils de renforcement (10) sont soumis à une précontrainte et tirent radialement vers l'intérieur les parties supérieures (5) des pales du rotor et les y maintiennent, ce qui donne des pales du rotor (102) incurvées vers l'intérieur.

12. Eolienne (100) selon l'une des revendications 1 à 7, **caractérisée en ce que** le rotor (102) comprend des fils de retenue (23) qui retiennent un élément de connexion commun (22), auquel les extrémités distales supérieures des parties supérieures (5) des pales de rotor incurvées vers l'intérieur sont fixées, en des troisièmes points de fixation (24, 25, 26) aux extrémités proximales inférieures des parties supérieures (5) ou aux extrémités distales supérieures des parties inférieures (4) des pales de rotor.

13. Eolienne (100) selon la revendication 12, **caractérisée en ce que** le rotor (102) comprend d'autres fils de retenue (27) qui, pour chaque pale de rotor, relient une zone centrale de la partie supérieure (5), située entre l'extrémité distale et l'extrémité proximale de la partie (5), aux troisièmes points de fixation (24, 25, 26) des pales de rotor respectivement opposées à la pale de rotor.

14. Eolienne (100) selon la revendication 12 ou 13, **caractérisée en ce que** les troisièmes points de fixation (24, 25, 26) sont identiques aux premiers points de fixation (6).

15. Eolienne (100) selon l'une des revendications précédentes, **caractérisée en ce que** des éléments de carénage (15) sont disposés sur un ou plusieurs des fils (8; 9; 10; 23; 27; 32; 45) du rotor (102) pour réduire la résistance à l'air des fils (8; 9; 10; 23; 27; 32; 45) lorsque le rotor (102) est en rotation.

16. Parc éolien flottant (106) comprenant une plateforme flottante (36, 42) sur laquelle sont fixées plusieurs éoliennes (100), **caractérisé en ce que** les éoliennes (100) sont réalisées selon l'une des revendications précédentes.

17. Parc éolien (106) selon la revendication 16, **caractérisé en ce que** les rotors (102) de deux éoliennes (100) du parc éolien (106) tournent dans des directions opposées (A, B).
